# EUROPEAN PATENT SPECIFICATION

(11) **EP 0 943 501 B1**
(45) Date of publication and mention of the grant of the patent: **02.06.2004**
(21) Application number: 99105469.3
(22) Date of filing: 17.03.1999
(51) Int. Cl.: B60R 21/22, B60R 21/24, B60R 21/16

(54) **Vehicle occupant safety apparatus**
Fahrzeuginsassen-Sicherheitsvorrichtung
Dispositif de protection des occupants d'un véhicule

(30) Priority: 18.03.1998 US 40857; 19.06.1998 US 99707
(43) Date of publication of application: 22.09.1999
(73) Proprietor: TRW VEHICLE SAFETY SYSTEMS INC., Lyndhurst Ohio 44124 (US)
(72) Inventor: Sutherland, Daniel R., Lyndhurst, Ohio 44124 (US); Vaidyaraman, Srinivasan, Rochester Hills, Michigan 48307 (US); Nayef, Ayad G., Auburn Hills, Michigan 48326 (US); Altamore, Paul F., Sterling Heights, Michigan 48313 (US)
(74) Representative: Wagner, Karl H., Dipl.-Ing.

(56) References cited:
- EP-A- 0 810 128
- DE-A- 19 632 222
- DE-A- 19 650 940
- PATENT ABSTRACTS OF JAPAN vol. 016, no. 099 (M-1220), 11 March 1992 (1992-03-11) & JP 03 276844 A (MAZDA MOTOR CORP), 9 December 1991 (1991-12-09)
- "INFLATABLE ROOF BLADDER FOR ROLLOVER PROTECTION" RESEARCH DISCLOSURE,GB,INDUSTRIAL OPPORTUNITIES LTD. HAVANT, no. 407, page 244-245 XP000773862 ISSN: 0374-4353
- "DEPLOYABLE FOAM SYSTEM FOR ROLLOVER PROTECTION" RESEARCH DISCLOSURE,GB,INDUSTRIAL OPPORTUNITIES LTD. HAVANT, no. 407, page 269-270 XP000773872 ISSN: 0374-4353

## Description

### Background of the Invention

The present invention relates to a vehicle occupant safety apparatus and, in particular, to a vehicle safety apparatus for helping to protect an occupant of a vehicle having a roof and a side structure

JP-A-03276844 comprises the features of the preamble of claim 1 and discloses a pillar side air bag module and a roof side-rail side air bag module. Research disclosure XP-000773862 discloses an inflatable roof bladder system for helping to protect a vehicle occupant in the event of a vehicle rollover accident. Research disclosure XP-000773872 relates to a deployable foam system for helping to protect a vehicle occupant in the event of a vehicle rollover accident.

In accordance with the present invention a vehicle occupant safety apparatus as set forth in claim 1 is provided.

Preferred embodiments of the invention are disclosed in the dependent claims.

### Summary of the Invention

The present invention is a vehicle occupant safety apparatus for helping to protect an occupant of a vehicle having a roof and a side structure. The apparatus includes an inflatable vehicle occupant protection device having a deflated condition and having an inflated condition in which a head portion of the inflatable device is inflated between the occupant's head and the vehicle roof and a side portion of the inflatable device is inflated between the occupant and the vehicle side structure. The apparatus further includes an actuatable inflation fluid-source for, upon actuation, directing inflation fluid into the inflatable device to inflate the inflatable device from the deflated condition to the inflated condition.

In one embodiment, the head portion of the inflatable device when in the deflated condition has panels which lie generally parallel to a headliner between the headliner and the roof and which extend from the vehicle side approximately to the vehicle centerline. The inflatable device comprises inner and outer panels each made from a single piece of fabric material.

In another embodiment, an actuatable first inflation fluid source directs inflation fluid into the side portion of the inflatable device. A second inflation fluid source directs inflation fluid into the head portion of the inflatable device. The apparatus further includes control means responsive to at least one sensed vehicle condition for selectively actuating one or both of the fluid sources, with actuation of the second inflation fluid source at a predetermined period of time after actuation of the first inflation fluid source preferred if both fluid sources are actuated.

### Brief Description of the Drawings

The foregoing and other features of the present invention will become apparent to one skilled in the art to which the present invention relates upon consideration of the following description of the invention with reference to the accompanying drawings, wherein:
Fig. 1 is a schematic block diagram of a vehicle occupant safety apparatus in accordance with the present invention including an inflatable vehicle occupant protection device comprising a side curtain and a headliner air bag;
Fig. 2 is a front elevational view of a portion of a vehicle including the safety apparatus of Fig. 1, the protection device being shown in an uninflated condition;
Fig. 3 is a perspective view of the protection device shown in an inflated condition;
Fig. 4 is a plan view of an inner panel which forms one portion of the protection device;
Fig. 5 is a plan view of an outer panel which forms another portion of the protection device;
Fig. 6 is a perspective view of the inner and outer panels of the protection device;
Fig. 7 is an enlarged perspective view showing a portion of the protection device assembled with an inflator;
Fig. 8 is a schematic elevational view of the vehicle showing the protection device in an inflated condition;
Fig. 9 is a schematic top plan view of the vehicle showing the protection device in an inflated condition;
Fig. 10 is a view similar to Fig. 1 of a vehicle occupant safety apparatus in accordance with a second embodiment of the present invention;
Fig. 11 is a view similar to Fig. 3 of a vehicle occupant safety apparatus in accordance with a third embodiment of the present invention;
Fig. 12 is a schematic block diagram of a vehicle occupant safety apparatus embodying the present invention;
Fig. 13 is a front elevational view of a portion of a vehicle including the safety apparatus of Fig. 12;
Fig. 14 is a view similar to Fig. 13 of the vehicle occupant safety apparatus including a window air bag shown in an inflated condition;
Fig. 15 is a view similar to Fig. 14 also showing a headliner air bag in an inflated condition;
Fig. 16 is a schematic fragmentary view of a portion of the vehicle safety apparatus of Fig. 12; and
Fig. 17 is a schematic fragmentary view similar to Fig. 16 of a portion of a vehicle safety apparatus constructed in accordance with another embodiment of the invention.

### Description of Preferred Embodiment

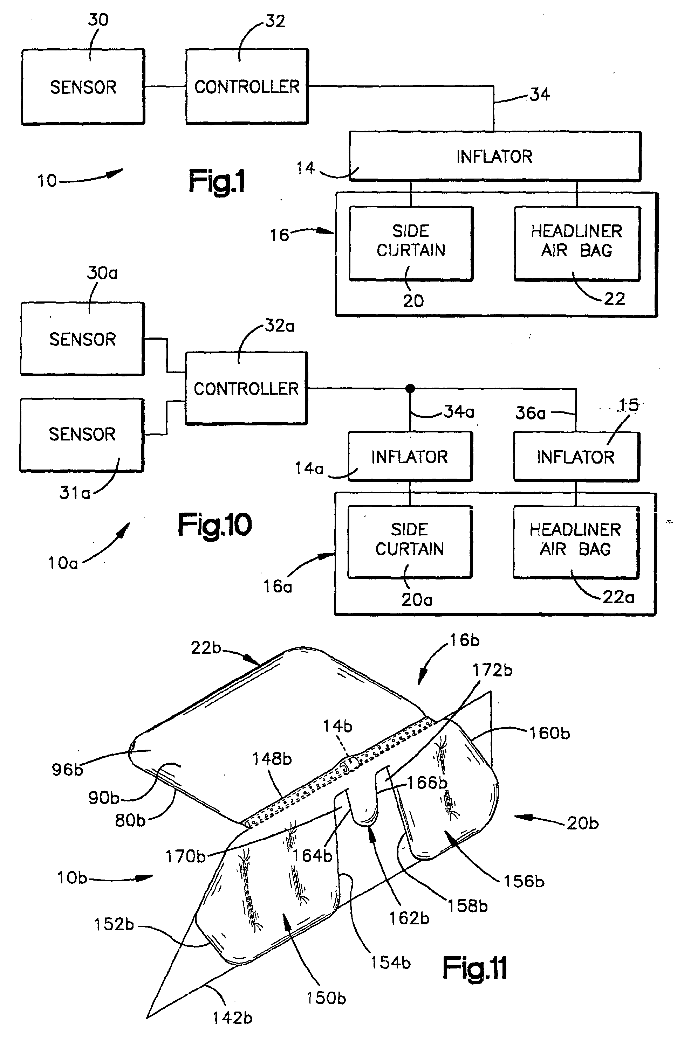

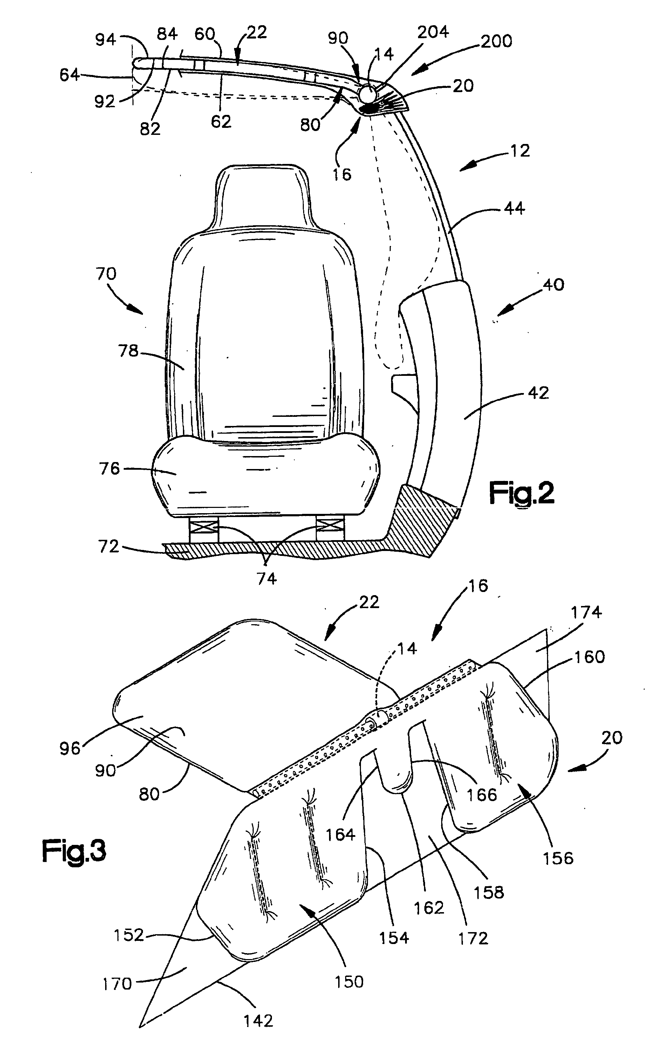

The present invention relates to a vehicle occupant safety apparatus and, in particular, to a vehicle safety apparatus for helping to protect an occupant of a vehicle having a roof and a side structure. The present invention is applicable to various vehicle occupant safety apparatus constructions. As representative of the present invention, Fig. 1 illustrates schematically a vehicle occupant safety apparatus 10 for use in a vehicle 12 (Fig. 2).

The safety apparatus 10 (Fig. 1) includes an inflator 14 for inflating an inflatable vehicle occupant protection device 16. The protection device 16 includes a side portion or side curtain 20, and a head portion or headliner air bag 22, both described below in more detail.

The inflator 14 preferably contains a stored quantity of pressurized inflation fluid in the form of gas to inflate the protection device 16. The inflator 14 alternatively could contain a combination of pressurized inflation fluid and ignitable material for heating the inflation fluid, or could be a pyrotechnic inflator which uses the combustion of gas-generating material to generate inflation fluid.

The safety apparatus 10 includes a sensor 30 for sensing a vehicle condition such as a side impact to the vehicle 12 or a vehicle rollover condition. The safety apparatus 10 also includes a controller 32 for actuating the inflator 14 in response to the output of the sensor 30. Upon the occurrence of a vehicle condition for which inflation of the protection device 16 is desired to help protect the occupant of the vehicle 12, the sensor 30 and the controller 32 cooperate to send an actuation signal to the inflator over lead wires 34. The inflator 14 is actuated in a manner described below to inflate the protection device 16.

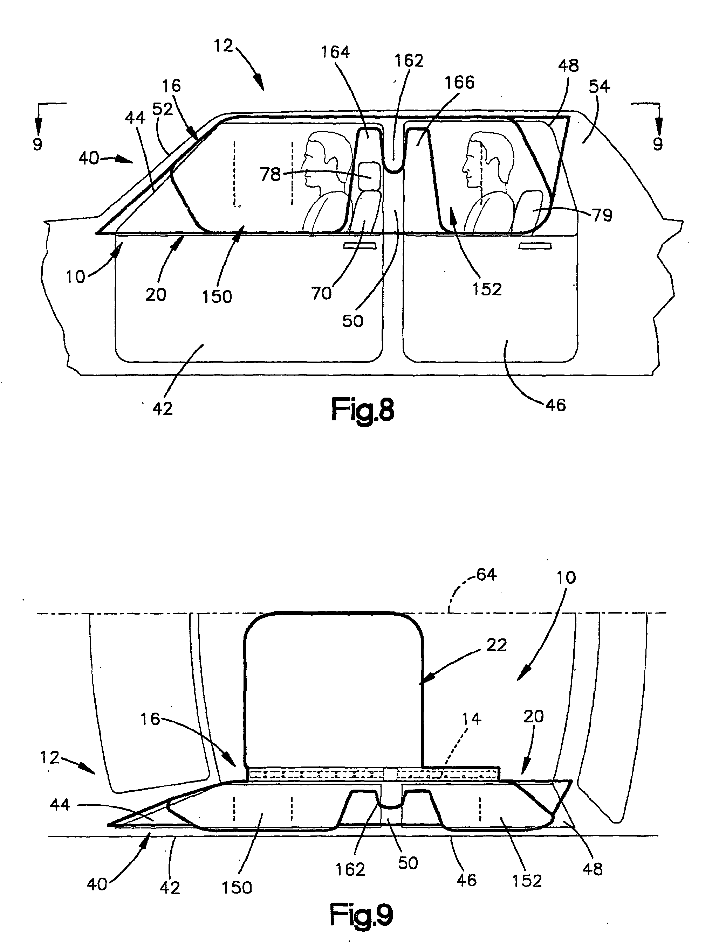

The vehicle 12 includes a side structure 40 (Figs. 2 and 8). The vehicle side structure 40 includes a front door 42 and a front side window 44. The vehicle side structure 40 also includes a back door 46 and a back side window 48. The vehicle B-pillar 50 is disposed between the front side window 44 and the back side window 48. The side structure 40 also includes the vehicle A-pillar 52 and C-pillar 54.

The vehicle 12 has a roof or roof panel 60 inside of which is supported a headliner 62. The headliner 62 extends generally parallel to the roof panel 60. The roof panel 60 and the headliner 62 both extend laterally in the vehicle 12, from the vehicle side structure 40 past the vehicle centerline 64.

A front seat 70 of the vehicle 12 is supported on the vehicle floor 72 by tracks 74. The seat 70 includes a seat bottom cushion 76 and a seatback 78. When a vehicle occupant (shown in Fig. 8 only) sits in the seat 70, the occupant is adjacent to the vehicle front door 42 and window 44. The side of the occupant's head is adjacent to the front side window 44. The top of the occupant's head is adjacent to the headliner 62. The vehicle 12 also has a back seat 79 (Fig. 8).

The protection device 16 is made from an inner panel 80 and an outer panel 90. The panels 80 and 90 are preferably made from a fabric material, such as woven nylon. The panels 80 and 90 may, alternatively, be made from another type of material, such as plastic film.

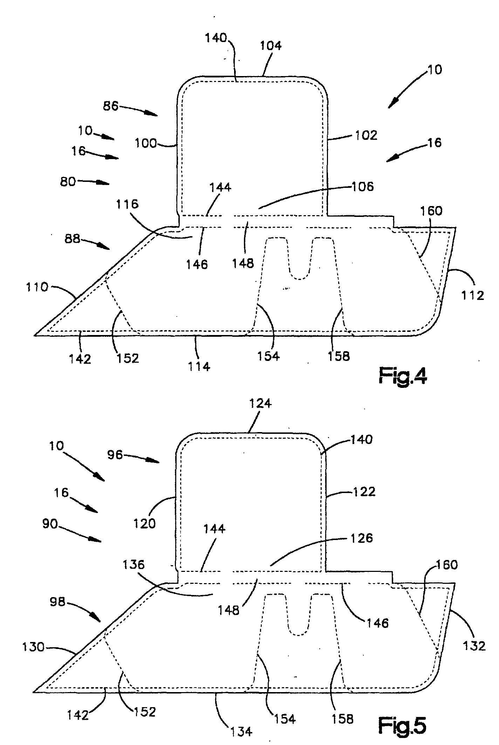

The inner panel 80 (Fig. 2) has an inner side surface 82 which is presented toward the headliner and an outer side surface 84 which is presented toward the outer panel 90. The inner panel 80 includes a head section 86 (Fig. 4) and a side section 88.

The outer panel 90 is substantially identical in configuration to the inner panel 80. The outer panel 90 has an inner side surface 92 (Fig. 2) which is presented toward the inner panel 80 and an outer side surface 94 which is presented toward the roof 60. The outer panel includes a head section 96 (Fig. 5) and a side section 98.

The head section 86 of the inner panel 80 (Fig. 4) has a generally rectangular configuration including a forward edge portion 100 and a rearward edge portion 102. The head section 86 also has an inner edge portion 104 and an outer edge portion 106. The outer edge portion 106 of the head section 86 merges with the side section 88 of the inner panel 80.

The side section 88 of the inner panel 80 has an elongate, generally trapezoidal configuration including a forward edge portion 110 and a rearward edge portion 112. The side section 88 of the inner panel 80 also has a lower edge portion 114 and an upper edge portion 116. The upper edge portion 116 of the side section 88 merges with the head section 86 of the inner panel 80.

The head section 96 of the outer panel 90 (Fig. 5) has a generally rectangular configuration including a forward edge portion 120 and a rearward edge portion 122. The head section 96 also has an inner edge portion 124 and an outer edge portion 126. The outer edge portion 126 of the head section 96 merges with the side section 98 of the outer panel.

The side section 98 of the outer panel 90 has an elongate, generally trapezoidal configuration including a forward edge portion 130 and a rearward edge portion 132. The side section 98 of the outer panel 90 also has a lower edge portion 134 and an upper edge portion 136. The upper edge portion 136 of the side section 98 merges with the head section 96 of the outer panel.

The inner panel 80 and the outer panel 90 are sewn together along a plurality of sew lines to form the protection device 16. One sew line 140 extends generally about the outer periphery of the head sections 86 and 96 of the inner and outer panels 80 and 90. Another sew line 142 extends generally about the outer periphery of the side sections 88 and 98 of the inner and outer panels 80 and 90. Parallel sew lines 144 and 146 at the area between the head sections 86 and 96 and the side sections 88 and 98 form an inflator channel 148 in the inflatable device. (It should be understood that each one of the sew lines in the protection device 16 may comprise a plurality of individual stitching sections, not merely one.)

The protection device 16 as thus formed includes the side curtain 20 and the headliner air bag 22. The side curtain 20 is made from only the side section 88 of the inner panel 80 and the side section 98 of the outer panel 90.

No other panels are included in the side curtain 20. The side curtain 20 includes an inflatable front window segment 150 (Fig. 3) which is defined by the sew lines 142 and additional sew lines 152 and 154. The side curtain includes an inflatable back window segment 156 which is defined by the sew line 142 and additional sew lines 158 and 160. An inflatable pillar segment 162 of the side curtain 20 is defined by the sew line 146 and additional sew lines 164 and 166.

The sew lines in the side portion 20 of the protection device 16 define three non-inflatable segments 170, 172 and 174 of the side curtain 20. The first or front non-inflatable segment 170 is connected with the vehicle A-pillar 52 and extends between the A-pillar and the inflatable front window segment 150. The second or middle non-inflatable segment 172 extends between the front inflatable segment 150 and the back window inflatable segment 156. The inflatable pillar segment 162 extends partially into the middle non-inflatable segment 172. The third or back non-inflatable segment 174 is connected with the vehicle C-pillar 54 and extends between the inflatable back window segment 156 and the C-pillar.

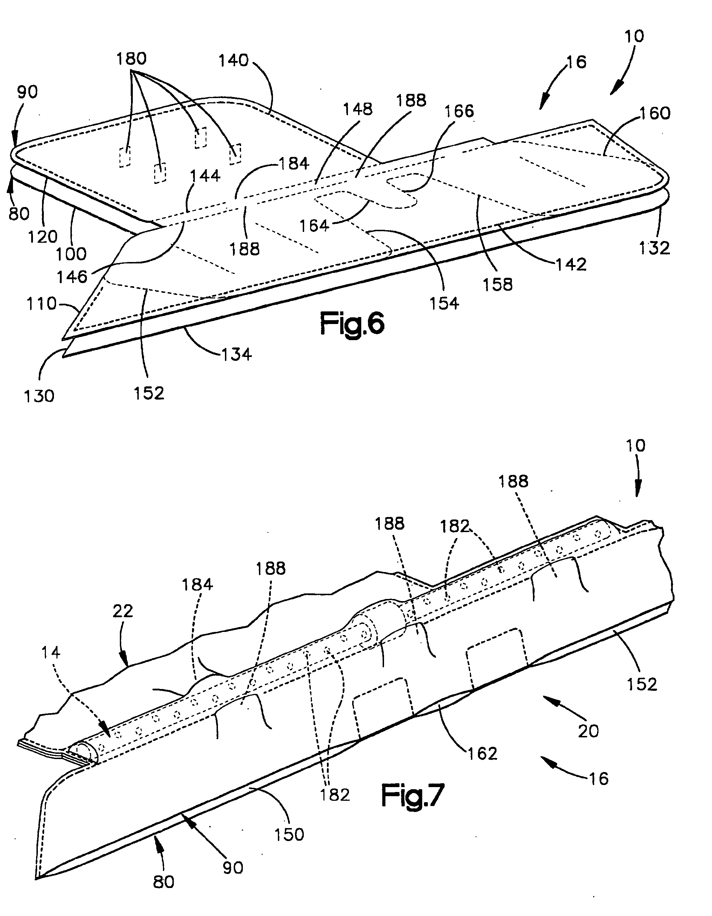

The headliner air bag 22 is made from only the head section 86 of the inner panel 80 and the head section 96 of the outer panel 90. No other panels are included in the headliner air bag 22. The headliner air bag 22 may optionally include a plurality of tethers 180 (Fig. 6) between the head section 86 of the inner panel 80 and the head section 96 of the outer panel 90. The tethers 180 control the thickness of the headliner air bag 22 when it is inflated.

The inflator 14 is mounted in the inflator channel 148 between the headliner air bag 22 and the side curtain 20. The inflator 14 has a plurality of nozzles or inflation fluid outlets 182 (Fig. 7) for directing inflation fluid into the inflatable device 16 to inflate the inflatable device.

The sew lines 144 and 146 which define the inflator channel 148 are discontinuous to form at least one opening 184 (Figs. 6 and 7) which enables fluid to flow from the inflator 14 into the headliner air bag 22. The sew lines 144 and 146 are also discontinuous to form a plurality of openings 188 which enable fluid to flow from the inflator 14 into the side curtain 20.

The inflator 14 and the protection device 16 are mounted as a module 200 in the vehicle 12. As illustrated, the module 200 is mounted at the outboard side of the headliner 62, over the vehicle side structure 40.

The module 200 includes means illustrated schematically at 204 (Fig. 2) for mounting the inflator 14 and the protection device 16 to the vehicle 12. The mounting means 204 is generally of a known construction and therefore is not illustrated in detail. The mounting means 204 may include one or more brackets or other fasteners for securing the module 200 in position on the vehicle 12.

The upper edge of the front non-inflatable segment 170 of the side curtain 20 is preferably connected with the A-pillar 52. The upper edge of the back non-inflatable segment 174 of the side curtain 20 is preferably connected with the C-pillar 54. The remainder of the side curtain 20 is stored in a deflated condition above the windows 42 and 46. The headliner air bag 22 is disposed in a generally flat condition between the roof panel 60 and the headliner 62. The head sections 86 and 96 lie generally parallel to each other and to the roof 60 and the headliner 62.

Upon the occurrence of a vehicle condition for which it is desired to help protect an occupant of the vehicle 12, such as a side impact to the vehicle or a rollover condition of the vehicle, the inflator 14 is actuated in a known manner by the controller 32. Inflation fluid is directed from the inflator 14 through the nozzles 182 of the inflator and into the side curtain 20. The side curtain 20 inflates generally vertically downward in the vehicle 12, inside the side structure 40 of the vehicle. Inflation fluid flows into the side curtain 20 in the same generally vertically downward direction in the vehicle.

The inflatable front window segment 150 of the side curtain 20 inflates to a position inside the front side window 44 of the vehicle 12. The inflatable back window segment 156 of the side curtain 20 inflates to a position inside the back side window 48 of the vehicle 12.

The middle non-inflatable segment 172 of the side curtain 20 is disposed generally laterally outward of the seatback 78 of the front seat 70. This enables the front window segment 150 of the side curtain to inflate laterally inward in the vehicle 12 without being restrained significantly by contact with the front seatback 78.

The inflatable pillar segment 162 of the side curtain 20 inflates to a position inside the B-pillar 50 of the vehicle 12. The pillar segment 162 of the side curtain 20 helps to protect against vehicle occupant contact with the B-pillar 50 of the vehicle 12, and also helps ensure proper inflation of the front and back inflatable segments 150 and 156 of the side curtain.

When the inflator 14 is actuated, inflation fluid is also directed through the nozzles 182 into the headliner air bag 22. The headliner air bag 22 inflates generally laterally in the vehicle, that is, in a direction transverse to the vehicle side structure 40 and between the roof panel 60 and the headliner 62, at a location above the seat 70. Inflation fluid flows into the headliner air bag 22 in the same generally lateral direction in the vehicle, transverse to the vehicle side structure. The roof panel 60 is more rigid than the headliner 62, so the headliner air bag 22 tends to inflate by pushing the headliner toward the seat 70. The interposition of the headliner air bag 22 between the occupant's head and the vehicle roof 60 helps to protect the occupant from injury due to contact with the roof. The headliner air bag 22 may, alternatively, deploy through an opening in the headliner 62, rather than behind the headliner.

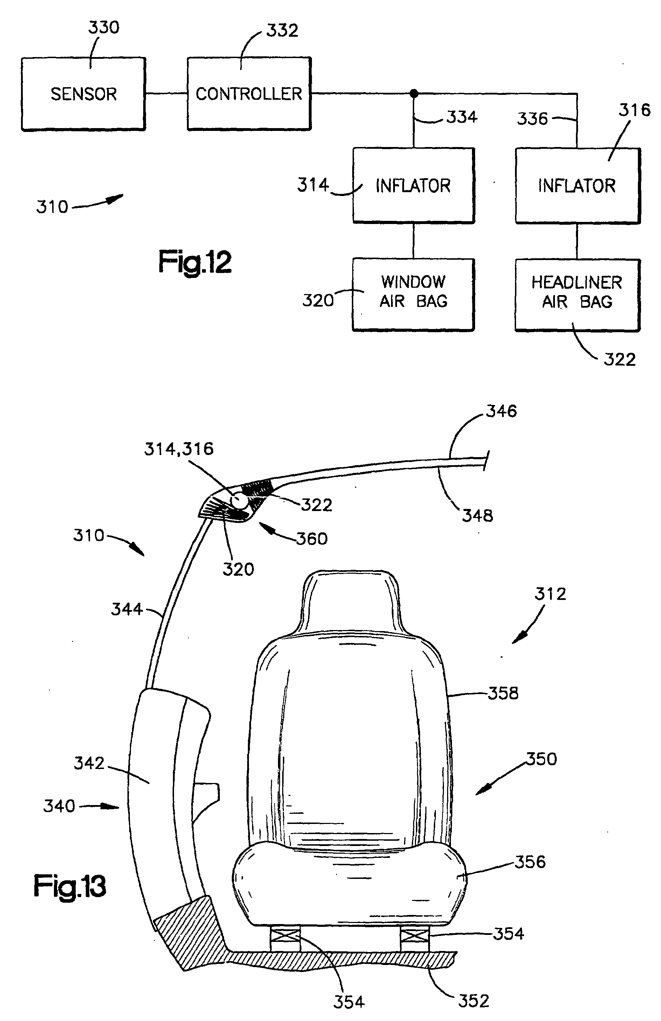

Fig. 10 is a view similar to Fig. 1 of a vehicle safety apparatus 10a constructed in accordance with a second embodiment of the invention. The safety apparatus 10a is similar in construction to the safety apparatus 10 (Figs. 1-5) and similar parts are given the same reference numerals with the suffix "a" added for clarity.

The safety apparatus 10a (Fig. 10) includes two separate inflators 14a and 15, rather than the single inflator 14 of Fig. 1. The inflator 14a, when actuated, emits inflation fluid under pressure for inflating the side curtain 20a. The inflator 15, when actuated, emits inflation fluid under pressure for inflating the headliner air bag 22a. The inflators 14a and 15 may, alternatively, be separate, independently actuatable stages of a single inflator, rather than two separate inflators. The safety apparatus 10a (Fig. 10) also includes two separate sensors 30a and 31, for sensing a side impact condition of the vehicle 12a and a rollover condition of the vehicle, respectively.

A condition of the vehicle 12a which requires protection of the top of the vehicle occupant's head, that is, a rollover condition, typically develops over a longer period of time than a side impact condition. Therefore, the second inflator 15 may be actuated at a selected period of time after the actuation of the first inflator 14a. In addition, it may in some circumstances be desirable to actuate the second inflator 15, and thereby inflate the headliner air bag 22a, prior to (or even without) actuation of the first inflator 14a.

Fig. 11 is a view similar to Fig. 3 of a vehicle safety apparatus 10b constructed in accordance with a third embodiment of the invention. The safety apparatus 10b is similar in construction to the safety apparatus 10 (Figs. 1-5) and similar parts are given the same-reference numerals with the suffix "b" added for clarity.

The safety apparatus 10b (Fig. 11) includes a headliner air bag 22b which extends over both the front seat area and the back seat area o'f the vehicle 12b. The headliner air bag 22b is disposed between a roof panel 60b and a headliner 62b (not shown) of the vehicle 12b. The inflator 14b, when actuated, emits inflation fluid under pressure for inflating the headliner air bag 22b and the side curtain 20b. The inflated headliner air bag 22b can help to protect both front and rear occupants of the vehicle 12b. The safety apparatus 10b may, alternatively, include two separate inflators, or separately actuatable stages of a single inflator, as discussed above with reference to the embodiment of Fig. 10.

Fig. 12 illustrates schematically a vehicle occupant safety apparatus 310 for use in a vehicle 312 (Fig. 13). The safety apparatus 310 (Fig. 1) includes first and second inflators 314 and 316, described below in more detail. The apparatus also includes first and second inflatable vehicle occupant protection devices in the form of a window air bag or side curtain 320 and a headliner air bag 322, both described below in more detail.

The safety apparatus 310 includes electrical circuitry including a sensor 330 for sensing a vehicle condition such as a side impact to the vehicle 312 or a vehicle rollover condition. The safety apparatus 310 also includes a controller 332 for actuating one or both of the inflators 314 and 316 in response to the output of the sensor 330. Upon the occurrence of a vehicle condition for which inflation of one or both of the air bags 320 and 322 is desired to help protect the occupant of the vehicle 312, the sensor 330 and the controller 332 cooperate to send an actuation signal to one or both of the inflators 314 and 316 over lead wires 334 and 336.

The vehicle 312 includes a side structure of which a portion is illustrated at 340. The side structure 340 includes a door 342 and a window 344. The vehicle also has a roof 346 inside of which is supported a headliner 348.

A seat 350 is supported on the vehicle floor 352 by tracks 354. The seat 350 includes a seat bottom cushion 356 and a seatback 358. When a vehicle occupant (not shown) sits in the seat 350, the occupant is adjacent to the vehicle door 342 and window 344. The side of the occupant's head is adjacent to the window 344. The top of the occupant's head is adjacent to the headliner 348.

The inflators 314 and 316 and the air bags 320 and 322 are mounted as a module 360 in the vehicle 312. As illustrated, the module 360 is mounted at the outboard side of the headliner 348, over the window 344.

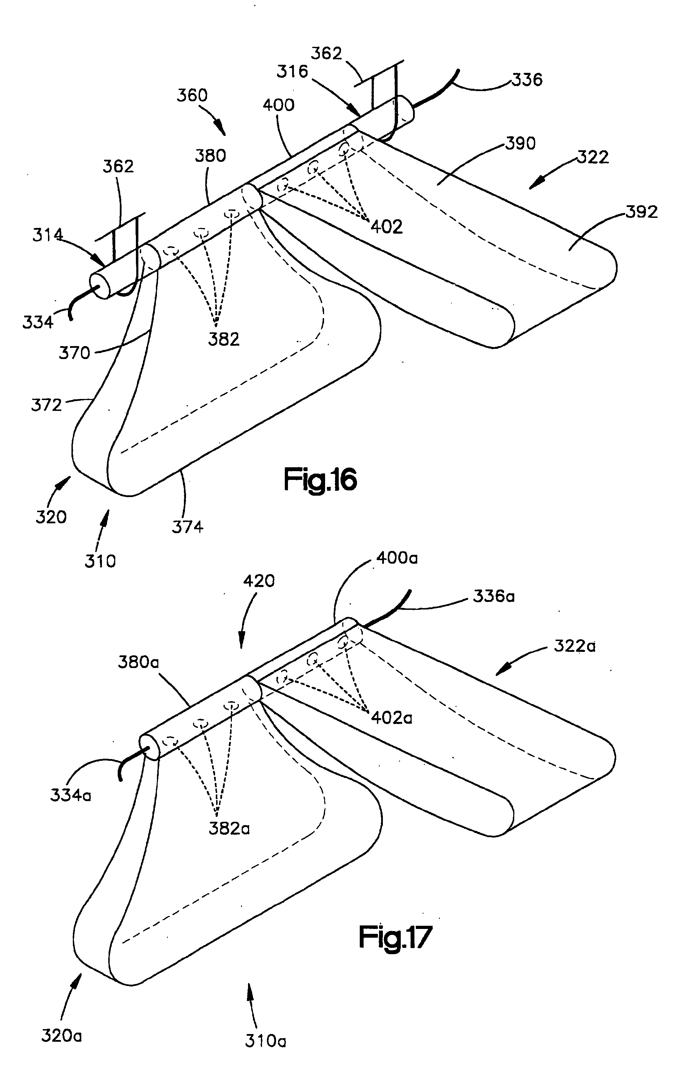

The module 360 includes means illustrated schematically at 362 (Fig. 16) for mounting the inflators 314 and 316 and the air bags 320 and 322 to the vehicle 312. The mounting means 362 is generally of a known construction and therefore is not illustrated in detail. The mounting means 362 may include one or more brackets or other fasteners for securing the module 360 in position on the vehicle 312.

The first air bag 320, or window air bag, when inflated, extends generally downward in the vehicle 312 along the side of the window 344. The window air bag 320 has an upper end portion 370 secured to or adjacent the first inflator 314. A central portion 372 of the window air bag 320 extends between the window 344 and the occupant's head. A lower end portion 374 of the window air bag 320 extends inward of the door 342, at a location below the window 344, so that the inflated air bag can resist movement of the occupant in a direction out of the window opening.

The first inflator 314 preferably contains a stored quantity of pressurized inflation fluid in the form of gas to inflate the window air bag 320. The first inflator alternatively could contain a combination of pressurized inflation fluid and ignitable material for heating the inflation fluid, or could be a pyrotechnic inflator which uses the combustion of gas-generating material to generate inflation fluid.

The first inflator includes a diffuser 380. The diffuser 380 (not shown in detail) is preferably a metal member having a plurality of inflation fluid outlets 382 for directing inflation fluid into the window air bag 320. The diffuser 380 may be formed as a portion of the first inflator 314 or may be a separate member connected with or adjacent to the inflator.

The inflation fluid outlets 382 in the diffuser 380 are oriented in the vehicle 312 so that inflation fluid from the first inflator 314 flows in a predetermined direction into the window air bag 320 to inflate the air bag. Specifically, the inflation fluid outlets 382 are oriented in the vehicle 312 so that inflation fluid from the first inflator 314 flows in a direction to inflate the window air bag 320 between the window 344 and the vehicle occupant's head. This is a vertically downward direction when the vehicle 312 is in an upright orientation.

The second air bag 322, or headliner bag, when inflated, extends generally laterally in the vehicle 312, between the roof 346 and the headliner 348. The headliner bag 322 has an outer end portion 390 connected with or adjacent to the second inflator 316. A main body portion 392 of the headliner bag 322 is extendable between the roof 346 and the headliner 348, at a location above the seat 350 and the occupant's head, so that the inflated headliner bag 322 can help to protect the occupant's head.

The second inflator 316 is preferably similar in construction to the first inflator 314. The second inflator 316 includes a diffuser 400. The diffuser 400 (not shown in detail) is preferably a metal member having a plurality of inflation fluid outlets 402 for directing inflation fluid into the headliner bag 322. The inflation fluid outlets 402 are oriented in the vehicle 312 so that inflation fluid from the second inflator 316 flows in a predetermined direction into the headliner bag 322 to inflate the headliner bag. Specifically, the inflation fluid outlets 402 are oriented in the vehicle 312 so that inflation fluid from the second inflator 316 is directed generally laterally in the vehicle, to inflate the headliner bag 322 laterally between the roof 346 and the headliner 348, at a location above the seat 350 and the vehicle occupant's head. This is a generally horizontal direction when the vehicle 312 is in an upright orientation.

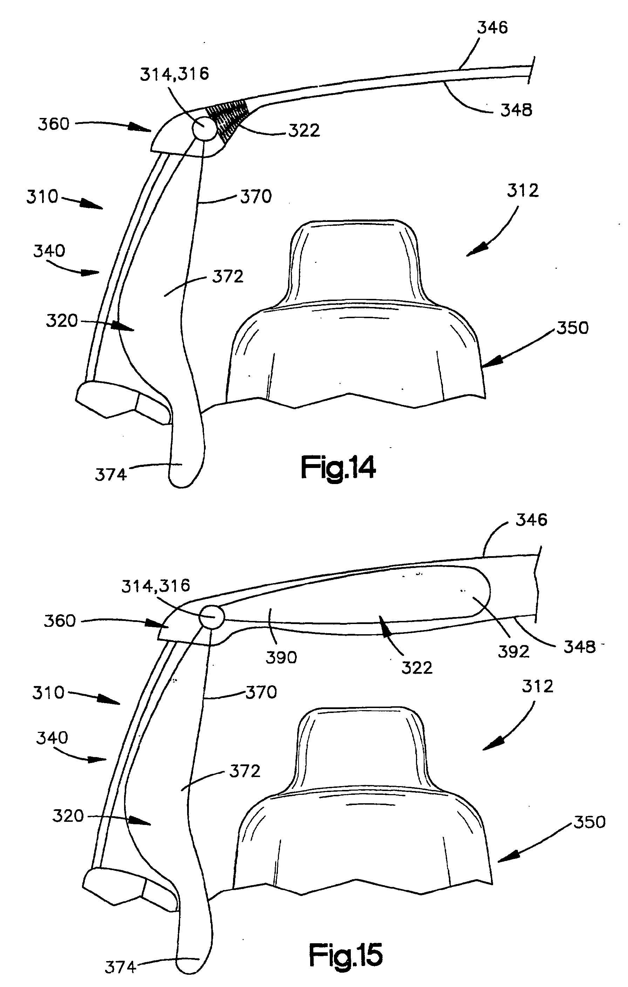

Upon the occurrence of a vehicle condition, such as a side impact to the vehicle 312, for which it is desired to help protect the occupant of the seat 312, the first inflator 314 is actuated in a known manner by the controller 332. Inflation fluid is directed from the first inflator 314 through the diffuser outlets 382 of the diffuser 380 and into the window air bag 320. The window air bag 320 inflates generally vertically downward in the vehicle, between the window 344 and the vehicle occupant's head, as shown in Fig. 14.

If the vehicle electric circuitry, including the sensor 330 and the controller 332, determines that the vehicle 312 may be in a rollover condition, then the controller actuates the second inflator 316. When the second inflator 316 is actuated, inflation fluid is directed through the diffuser outlets 402 in the diffuser 400 and into the headliner air bag 322. The headliner air bag 322 inflates generally laterally in the vehicle, that is, between the roof 346 and the headliner 348, at a location above the vehicle occupant's head. The interposition of the headliner air bag 322 between the occupant's head and the vehicle roof 346 helps to protect the occupant from injury due to contact with the roof.

The second inflator 316 is actuated at a selected period of time after the actuation of the first inflator 314. This time delay is provided because a vehicle condition which requires protection of the top of the vehicle occupant's head, that is, a rollover condition, typically develops over a longer period of time than a side impact condition.

In addition, it may in some circumstances be desirable to actuate the second inflator 316, and inflate the headliner air bag 322, prior to (or even without) actuation of the first inflator 314. Thus, the sensor 330 may comprise separate sensors for sensing a side impact to the vehicle 312 and for sensing a rollover condition of the vehicle.

Fig. 17 is a schematic fragmentary view of a portion of a vehicle safety apparatus 310a constructed in accordance with a second embodiment of the invention. The safety apparatus 310a is similar in construction to the safety apparatus 310 (Figs. 12-16) and similar parts are given the same reference numerals with the suffix "a" added for clarity.

The safety apparatus 310a includes a single inflator 420 rather than the two separate inflators 314 and 316. The inflator 420 (Fig. 17) is a dual stage inflator which includes independently actuatable first and second stages. The first stage of the inflator 420, when actuated, emits inflation fluid under pressure through inflation fluid outlets 382a of a diffuser 380a. The second stage of the inflator 420, when actuated, emits inflation fluid under pressure through inflation fluid outlets 402a of a diffuser 400a. The single inflator 420, with the diffusers 380a and 400a, is mounted in the vehicle 312 in the same or a similar manner to the mounting of the inflators 314 and 316 as parts of the safety apparatus 310.

From the above description of the invention, those skilled in the art will perceive improvements, changes and modifications in the invention. Such improvements, changes and modifications within the skill of the art are intended to be covered by the appended claims.

## Claims

1. A vehicle occupant safety apparatus for helping to protect an occupant of a vehicle having a roof a headliner (62; 348) supported on the roof, and a side structure including a window (44,48), said apparatus comprising:
a first vehicle occupant protection device (20;320) inflatable into a position between the side of the occupant's head and the vehicle side structure (40);
a first inflation fluid source (14a; 314) for directing inflation fluid into said first inflatable device (20; 320) to inflate said first inflatable device;
a second vehicle occupant protection device (22; 322) inflatable into a position between the top of the occupant's head and the vehicle roof;
a second inflation fluid source (15; 316) actuatable independently of said first inflation fluid source for directing inflation fluid into said second inflatable device to inflate said second inflatable device;
control means responsive to at least one sensed vehicle condition for selectively actuating one or both of said first and second inflation fluid sources; **characterized in that** said first and second vehicle occupant protection devices have a deflated condition wherein said first and second protection devices are stored along an outboard side of said headliner above the vehicle window.

2. An apparatus as set forth in claim 1 wherein said control means comprises sensor means (30; 30e, 31a) for sensing at least one vehicle condition and controller means (32, 32a) for selectively providing an inflator actuation signal in response to said sensor means sensing the at least one vehicle condition.

3. An apparatus as set forth in claim 2 wherein said sensor means (30; 30a, 31a) is operative to sense a side impact condition of the vehicle and a rollover condition of the vehicle.

4. Apparatus as defined in claim 1 wherein said second vehicle occupant protection device is a headliner bag inflatable into a position between the top of the occupant's head and the vehicle roof and said first vehicle occupant protection device is a window bag inflatable into a position between the side of the occupant's head and the vehicle side structure.

5. An apparatus as set forth in claim 4 wherein said headliner air bag being inflatable into a position between the vehicle headliner and the roof of the vehicle.

6. An apparatus as set forth in claim 5 wherein said first inflation fluid source comprises means for directing inflation fluid to flow from said first inflation fluid source in a generally downward direction in the vehicle to inflate said window air bag in a generally downward direction in the vehicle, and said second inflation fluid source comprises means for directing inflation fluid to flow from said second inflation fluid source in a lateral direction in the vehicle to inflate said headliner air bag in a lateral direction in the vehicle.

7. A vehicle occupant safety apparatus as defined in claim 1 wherein said second inflatable device (20;320) is inflated by inflation fluid flow in a direction transverse to the vehicle side structure.

8. An apparatus as set forth in claim 1 wherein said first inflatable device is inflated by inflation fluid flow in a direction generally parallel to the vehicle side structure.

9. An apparatus as set forth in claim 1 wherein said inflatable devices comprise inner and outer panels (80, 90) each made from a single piece of material.

10. An apparatus as set forth in claim 9 wherein said second inflatable device comprises a head section of said inner panel and a head section of said outer panel which lie generally parallel to each other and to the headliner (62; 348) between the headliner and the roof.

11. An apparatus as set forth in claim 1 wherein the side structure includes a front side window and a back side window, and wherein:
said first inflatable device comprises an inflatable front window segment which when inflated extends inside of the front side window of the vehicle and an inflatable back window segment which when inflated extends inside of the back side window of the vehicle;
said first inflatable device further comprising at least one non-inflatable segment separating said inflatable front and back window segments of said side portion.

12. An apparatus as defined in claim 1 wherein said second vehicle occupant protection device when in the deflated condition has panels which lie generally parallel to the headliner between the headliner and the roof and which extend from the vehicle side approximately to the vehicle centerline.

13. An apparatus as set forth in claim 12 wherein said second vehicle occupant protection device (22; 322) further comprises at least one tether for controlling the thickness of said second device (22;322) when inflated.

14. An apparatus as set forth in claim 11 wherein the vehicle has a side structure which includes a B-pillar intermediate the front and back side windows, wherein said first vehicle occupant protection device further comprises an inflatable pillar segment which extends within said at least one non-inflatable segment and which extends inside the vehicle B-pillar when inflated.

15. Apparatus as defined in claim 1 comprising a single inflator (420).

16. An apparatus as set forth in claim 1 wherein said first and second inflation fluid sources comprise first and second stages of a single inflator, said first stage directing inflation fluid into said first vehicle occupant protection device and said second stage directing inflation fluid into said second vehicle occupant protection device.

## Patentansprüche

1. Eine Fahrzeugsicherheitsvorrichtung zum Helfen, einen Insassen eines Fahrzeugs zu schützen, das ein Dach besitzt, eine an dem Dach getragene Kopfauskleidung (62; 348) und eine Seitenstruktur, die ein Fenster (44;48) aufweist, wobei die Vorrichtung Folgendes aufweist:
eine erste Fahrzeuginsassenschutzeinrichtung (20; 320), die in eine Position zwischen der Seite des Kopfes des Insassen und der Fahrzeugseitenstruktur (40) aufblasbar ist;
eine erste Aufblasströmungsmittelquelle (14a; 314) zum Leiten von Aufblasströmungsmittel in die erste aufblasbare Einrichtung (20; 320), um die erste aufblasbare Einrichtung aufzublasen;
eine zweite Fahrzeuginsassenschutzeinrichtung (22; 322), die in eine Position zwischen der Oberseite des Kopfes des Insassen und dem Fahrzeugdach aufblasbar ist;
eine zweite Aufblasströmungsmittelquelle (15; 316), die unabhängig von der ersten Aufblasströmungsmittelquelle betätigbar ist, um Aufblasströmungsmittel in die zweite aufblasbare Einrichtung zu leiten, um die zweite aufblasbare Einrichtung aufzublasen;
Steuermittel, ansprechend auf mindestens einen abgefühlten Fahrzeugzustand, zum selektiven Betätigen einer oder beider der ersten und zweiten Aufblasströmungsmittelquellen;
**dadurch gekennzeichnet, dass** die ersten und zweiten Fahrzeuginsassenschutzeinrichtungen einen nicht aufgeblasenen Zustand besitzen, in dem die ersten und zweiten Schutzeinrichtungen entlang einer nach außen weisenden Seite der Kopfauskleidung oberhalb des Fahrzeugfensters gelagert sind.

2. Eine Vorrichtung nach Anspruch 1, wobei die Steuermittel Sensormittel (30; 30a; 31a) umfassen zum Abfühlen von mindestens einem Fahrzeugszustand und Steuermittel (32; 32a) zum selektiven Vorsehen bzw. Liefern eines Aufblasvorrichtungsbetätigungssignal ansprechend auf die Sensormittel, die zumindest einen Fahrzeugzustand abfühlen.

3. Eine Vorrichtung nach Anspruch 2, wobei die Sensormittel (30; 30a; 31a) wirksam sind, um einen Seitenaufprallzustand des Fahrzeugs und einen Überschlagszustand des Fahrzeugs abzufühlen.

4. Vorrichtung nach Anspruch 1, wobei die zweite Fahrzeuginsassenschutzeinrichtung eine Kopfauskleidungs-Airbag ist, die in eine Position zwischen die Oberseite des Kopf des Insassen und das Fahrzeugdach aufblasbar ist und wobei die erste Fahrzeuginsassenschutzeinrichtung ein Fenster-Airbag ist, der in eine Position zwischen die Seite eines Insassenkopfes und die Fahrzeugseitenstruktur aufblasbar ist.

5. Eine Vorrichtung nach Anspruch 4, wobei der Kopfauskleidungs-Airbag in eine Position zwischen die Fahrzeugkopfauskleidung und das Fahrzeugdach aufblasbar ist.

6. Eine Vorrichtung nach Anspruch 5, wobei die erste Aufblasströmungsmittelquelle Mittel aufweist, die das Aufblasströmungsmittel veranlasst, von der ersten Aufblasströmungsmittelquelle in einer im Allgemeinen Abwärtsrichtung in dem Fahrzeug zu fließen, um den Fenster-Airbag in einer im Allgemeinen nach unten gerichteten Richtung in dem Fahrzeug aufzublasen, und wobei die zweite Aufblasströmungsmittelquelle Mittel aufweist, die das Aufblasströmungsmittel veranlasst, von der zweiten Aufblasströmungsmittelquelle in einer lateralen Richtung in das Fahrzeug zu strömen, um den Kopfauskleidungs-Airbag in einer lateralen Richtung in dem Fahrzeug aufzublasen.

7. Eine Fahrzeuginsassensicherheitsvorrichtung nach Anspruch 1, wobei die zweite aufblasbare Einrichtung (20; 320) durch Aufblasströmungsmittelströmen aufgeblasen wird, und zwar in einer Richtung quer zu der Fahrzeugseitenstruktur.

8. Eine Vorrichtung nach Anspruch 1, wobei die erste aufblasbare Einrichtung durch Aufblasströmungsmittelströmen aufgeblasen wird in einer Richtung im Allgemeinen parallel zu der Fahrzeugseitenstruktur.

9. Eine Vorrichtung nach Anspruch 1, wobei die aufblasbaren Einrichtungen innere und äußere Zuschnitte (80; 90) aufweisen, die jeweils aus einem einzigen Stück Material hergestellt sind.

10. Eine Vorrichtung nach Anspruch 9, wobei die zweite aufblasbare Einrichtung einen Kopfabschnitt des Innenzuschnitts und einen Kopfabschnitt des Außenzuschnitts aufweist, die im Allgemeinen parallel zueinander und zu der Kopfauskleidung (62; 348) zwischen der Kopfauskleidung und dem Dach liegen.

11. Eine Vorrichtung nach Anspruch 1, wobei die Seitenstruktur ein Vorderseitenfenster und ein Rückseitenfenster aufweist und wobei:
die erste aufblasbare Einrichtung ein aufblasbares Vorderfenstersegment aufweist, das sich, wenn aufgeblasen, innerhalb des Vorderseitenfensters des Fahrzeugs erstreckt und ein aufblasbares Rückfenstersegment, das sich, wenn aufgeblasen, innerhalb des Rückseitenfenster des Fahrzeugs erstreckt;
wobei die erste aufblasbare Einrichtung ferner mindestens ein nicht aufblasbares Segment aufweist, das die aufblasbaren Vorder- und Rückfenstersegmente des Seitenteils trennt.

12. Eine Vorrichtung nach Anspruch 1, wobei die zweite Fahrzeuginsassenschutzeinrichtung, wenn sie sich in dem nicht aufgeblasenen Zustand befindet, Zuschnitte besitzt, die im Allgemeinen parallel zu der Kopfauskleidung liegen zwischen der Kopfauskleidung und dem Dach und die sich von der Fahrzeugseite ungefähr bis zu der Fahrzeugmittellinie erstrecken.

13. Eine Vorrichtung nach Anspruch 12, wobei die zweite Fahrzeuginsassenschutzeinrichtung (22; 322) weiterhin mindestens ein Fangband aufweist, zum Steuern der Dicke der zweiten Einrichtung (22; 322), wenn sie aufgeblasen ist.

14. Eine Vorrichtung nach Anspruch 11, wobei das Fahrzeug eine Seitenstruktur besitzt, die eine B-Säule zwischen den Vorder- und Rückseitenfenstern aufweist, wobei die erste Fahrzeuginsassenschutzeinrichtung ferner ein aufblasbares Säulensegment aufweist, das sich innerhalb des zumindest einen nicht aufblasbaren Segments erstreckt und das sich innerhalb der Fahrzeug-B-Säule erstreckt, wenn sie aufgeblasen ist.

15. Vorrichtung nach Anspruch 1, die eine einzige Aufblasvorrichtung (420) aufweist.

16. Eine Vorrichtung nach Anspruch 1, wobei die ersten und zweiten Aufblasströmungsmittelquellen erste und zweite Stufen einer Einzelaufblasvorrichtung aufweisen, wobei die erste Stufe Aufblasströmungsmittel in die erste Fahrzeuginsassenschutzeinrichtung leitet und die zweite Stufe Aufblasströmungsmittel in die zweite Fahrzeuginsassenschutzeinrichtung leitet.

## Revendications

1. Dispositif de sécurité pour un occupant de véhicule destiné à aider à protéger un occupant d'un véhicule ayant une garniture de toit (62 ; 348) supportée sur le toit et une structure latérale comprenant une fenêtre (44, 48), ledit appareil comportant :
un premier dispositif (20 ; 320) de protection d'un occupant de véhicule pouvant être gonflé jusque dans une position entre le côté de la tête de l'occupant et la structure latérale (40) du véhicule ;
une première source (14a ; 314) de fluide de gonflage destiné à diriger un fluide de gonflage dans ledit premier dispositif gonflable (20 ; 320) afin de gonfler ledit premier dispositif gonflable ;
un second dispositif (22 ; 322) de protection d'occupant de véhicule pouvant être gonflé jusque dans une position entre le dessus de la tête de l'occupant et le toit du véhicule ;
une seconde source (15 ; 316) de fluide de gonflage pouvant être actionnée indépendamment de ladite première source de fluide de gonflage pour diriger un fluide de gonflage dans ledit second dispositif gonflable afin de gonfler ledit second dispositif gonflable ;
un moyen de commande qui, en réponse à au moins une condition captée du véhicule, est destiné à actionner sélectivement l'une desdites première et seconde sources de fluide de gonflage ou ces deux sources ; **caractérisé en ce que** lesdits premier et second dispositifs de protection d'occupant de véhicule possèdent un état dégonflé dans lequel lesdits premier et second dispositifs de protection sont logés le long d'un côté extérieur de ladite garniture de toit au-dessus de la fenêtre du véhicule.

2. Appareil selon la revendication 1, dans lequel ledit moyen de commande comporte un moyen à capteur (30 ; 30a,31a) destiné à capter au moins une condition du véhicule et un moyen à dispositif de commande (32, 32a) destiné à produire sélectivement un signal d'actionnement de gonfleur en réponse au captage par ledit moyen à capteur de la, au moins une, condition du véhicule.

3. Appareil selon la revendication 2, dans lequel ledit moyen à capteur (30 ; 30a, 31a) a pour effet de capter une condition d'impact latéral du véhicule et une condition de retournement du véhicule.

4. Appareil selon la revendication 1, dans lequel ledit second dispositif de protection d'occupant de véhicule est un coussin de garniture de toit pouvant être gonflé jusque dans une position entre le dessus de la tête de l'occupant et le toit du véhicule et ledit premier dispositif de protection d'occupant de véhicule est un coussin de fenêtre pouvant être gonflé jusque dans une position entre le côté de la tête de l'occupant et la structure latérale du véhicule.

5. Appareil selon la revendication 4, dans lequel ledit coussin pneumatique de garniture de toit peut être gonflé jusque dans une position entre la garniture de toit du véhicule et le toit du véhicule.

6. Appareil suivant la revendication 5, dans lequel ladite première source de fluide de gonflage comprend un moyen destiné à diriger un fluide de gonflage pour qu'il s'écoule de ladite première source de fluide de gonflage dans une direction globalement vers le bas dans le véhicule afin de gonfler ledit coussin pneumatique de fenêtre dans une direction globalement vers le bas dans le véhicule, et ladite seconde source de fluide de gonflage comprend un moyen destiné à diriger un fluide de gonflage pour qu'il s'écoule de ladite seconde source de fluide de gonflage dans une direction latérale dans le véhicule afin de gonfler ledit coussin pneumatique de garniture de toit dans une direction latérale dans le véhicule.

7. Appareil de sécurité pour occupant de véhicule selon la revendication 1, dans lequel ledit second dispositif gonflable (20 ; 320) est gonflé par un écoulement de fluide de gonflage dans une direction transversale à la structure latérale du véhicule.

8. Appareil selon la revendication 1, dans lequel ledit premier dispositif gonflable est gonflé par un écoulement de fluide de gonflage dans une direction globalement parallèle à la structure latérale du véhicule.

9. Appareil selon la revendication 1, dans lequel lesdits dispositifs de gonflage comprennent des panneaux intérieur et extérieur (80, 90) formés chacun d'une seule pièce de matière.

10. Appareil selon la revendication 9, dans lequel ledit second dispositif gonflable comporte une section de tête dudit panneau intérieur et une section de tête dudit panneau extérieur qui s'étendent à peu près parallèlement l'une à l'autre et à la garniture de toit (62 ; 348) entre la garniture de toit et le toit.

11. Appareil selon la revendication 1, dans lequel la structure latérale comprend une fenêtre du côté avant et une fenêtre du côté arrière, et dans lequel :
ledit premier dispositif gonflable comprend un segment gonflable de fenêtre avant qui, lorsqu'il est gonflé, s'étend à l'intérieur de la fenêtre du côté avant du véhicule et un segment gonflable de fenêtre arrière qui, lorsqu'il est gonflé, s'étend à l'intérieur de la fenêtre du côté arrière du véhicule ;
ledit premier dispositif gonflable comportant en outre au moins un segment non gonflable séparant lesdits segments gonflables des fenêtres avant et arrière de ladite partie latérale.

12. Appareil selon la revendication 1, dans lequel ledit second dispositif de protection de l'occupant du véhicule, lorsqu'il est dans l'état dégonflé, comporte des panneaux qui s'étendent à peu près parallèlement à la garniture de toit entre la garniture de toit et le toit et qui s'étendent depuis le côté du véhicule approximativement jusqu'à l'axe central du véhicule.

13. Appareil selon la revendication 12, dans lequel ledit second dispositif (22 ; 322) de protection d'occupant de véhicule comporte en outre au moins un lien destiné à limiter l'épaisseur dudit second dispositif (22 ; 322) lorsqu'il est gonflé.

14. Appareil selon la revendication 11, dans lequel le véhicule comporte une structure latérale qui comprend un montant central entre les fenêtres des côtés avant et arrière, dans lequel ledit premier dispositif de protection d'occupant de véhicule comporte en outre un segment gonflable de montant qui s'étend à l'intérieur dudit, au moins un, segment non gonflable et qui s'étend à l'intérieur du montant central du véhicule lorsqu'il est gonflé.

15. Appareil selon la revendication 1, comportant un gonfleur unique (420).

16. Appareil selon la revendication 1, dans lequel lesdites première et seconde sources de fluide de gonflage comprennent des premier et second étages d'un gonfleur unique, ledit premier étage dirigeant un fluide de gonflage vers l'intérieur dudit premier dispositif de protection d'occupant de véhicule et ledit second étage dirigeant un fluide de gonflage vers l'intérieur dudit second dispositif de protection d'occupant de véhicule.
